# EUROPEAN PATENT SPECIFICATION

(11) **EP 2 189 571 B1**
(45) Date of publication and mention of the grant of the patent: **22.12.2010**
(21) Application number: 09175919.1
(22) Date of filing: 13.11.2009
(51) Int. Cl.: D21J 1/18, D21J 1/04

(54) **Environmentally-friendly wet process type hard fiberboard**
Umweltfreundliche, mittels eines Nassverfahrens hergestellte Hartfaserplatte
Panneau de fibres dur fabriqué par voie humide sans danger pour l'environnement

(30) Priority: 20.11.2008 JP 2008296641
(43) Date of publication of application: 26.05.2010
(73) Proprietor: Nichiha Corporation, Nagoya-shi, Aichi 455-8550 (JP)
(72) Inventor: Nishio, Tsutomu, Chita-gun Aichi 470-2101 (JP); Hatano, Akira, Wakayama-shi Wakayama 640-8451 (JP); Kuki, Manabu, Wakayama-shi Wakayama 640-8323 (JP)
(74) Representative: Behnisch, Werner

(56) References cited:
- GB-A- 1 489 407
- JP-A- 2006 007 534

## Description

### BACKGROUND OF THE INVENTION

### 1. Field of the Invention

The present invention relates to a wet process type hard fiberboard used, for example, as a building interior material, curing material or automobile interior material, and more particularly, to an environmentally-friendly wet process type hard fiberboard in use of an acrylic resin and an epoxy resin not containing bisphenol A as a reinforcing agent.

### 2. Description of the Related Art

A wet process type hard fiberboard (also simply referred to as "hardboard") is a fiberboard made primarily from wood chips by steaming and pulping the fibers followed by dispersing in a large volume of water to obtain a pulp slurry, adding a reinforcing agent and water-resisting agent, dehydrating and forming to a constant thickness, and hot-pressing to a density of 0.80 g/cm³ or more. Although wet process type hard fiberboard reinforcing agents conventionally included phenol resins, melamine resins, urea resins and starch, since the effects of phenol resins in particular were also remarkable in terms of water resistance in addition to strength, phenol resins came to be used nearly exclusively (see GB-A-1489407).

However, spurred on by recent environmental issues, there was a growing concern over the effects of phenol resins on the environment (odor and residual phenol), policies were adopted preventing the use of wet process type hard fiberboards due to the use of phenol resin as one of the raw materials thereof, even if used in only trace amounts such that the amount of residual phenol was essentially zero.

At the same time, there was a growing movement towards improving the environments in wet process type hard fiberboard factories, in order to realize this, it was necessary to eliminate phenol resins, which were the primary source of contamination of wet process type hard fiberboard factories.

This is because phenol resins contaminate the pulp slurry used in wet process type hard fiberboards, and this becomes adhered to equipment and floors, thereby considerably harming the surrounding environment.

Despite these underlying circumstances, since it was not easy to find an alternative reinforcing agent for wet process type hard fiberboards, phenol resins had been inexpensive and made it possible to easily allow the obtaining of required levels of board performance for a long time, and since phenol resins had been highly valued and been used nearly exclusively, there has been little research conducted on reinforcing agents to take the place of phenol resins.

Examples of known technologies relating to reinforcing agents as described above are listed in the patent publications below. The technology disclosed in Japanese Patent Application Laid-open No. 2003-39413 is a method for compressing a wet process type hard fiberboard using an adhesive such as phenol resin having formaldehyde as one of the raw materials thereof for the reinforcing agent by putting into an impregnated state followed by subjecting to a high temperature and high-pressure pressing.

In addition, Japanese Patent Application Laid-open No. 2008-80714 discloses a method for providing a wet process type hard fiberboard enabling formaldehyde and acetaldehyde to both be effectively captured and decomposed by permeating and solidifying an aldehyde capturing agent at least containing carbodihydrazide within one side or both sides of the wet process type hard fiberboard using an adhesive such as phenol resin having formaldehyde as one of the raw materials thereof as a reinforcing agent.

In addition, Japanese Patent Application Laid-open No. H07-214518 discloses a method for increasing the strength, bindability and water resistance of a mat surface by coating an acrylic emulsion and the like onto a formed mat to which thermosetting resin has been added prior to a hot pressing step.

In addition, Japanese Patent Application Laid-open No. 2006-7534 discloses a method for producing an environmentally-friendly cellulose-based fiberboard in which, although lignin is conventionally hardly used at all for pulp since the objective is the use of cellulose, an attempt was made to use such a lignin-based raw material by using a multifunctional compound as a reinforcing agent (a polyepoxy compound is described as a compound having rapid-curing properties by hot pressing superior to those of phenol resin, and phenol novolak is listed as an example thereof).

In addition, Japanese Patent Application Laid-open No. 2007-118261 discloses a method for obtaining a wood fiberboard having ant-repelling and insect-repelling performance by adding an adhesive such as phenol resin or epoxy resin containing a neonicotinoid-based compound during the course of producing a wood fiberboard.

In addition, Japanese Patent Application Laid-open No. 2005-280030 and Japanese Patent Application Laid-open No. 2005-288713 disclose methods for producing a hard fiberboard having superior dimensional stability, water resistance, scratch resistance and impact resistance during the course of producing a hard fiberboard containing mineral fibers that is not a wood hard fiberboard by using a phenol resin, acrylic emulsion or epoxy resin and the like as a binder, carrying out wet forming and drying to obtain a semi-cured mat, and impregnating the semi-cured mat with an acrylic emulsion and the like followed by hot-pressing. Furthermore, since the acrylic emulsion disclosed in these patent references cures at a low temperature of 80 to 110°C, it is judged to be a thermoplastic resin and not a thermosetting resin in the manner of the present invention.

Moreover, Japanese Patent Application Laid-open No. 2001-200497 discloses a method for producing a fiberboard having adequate strength without causing large variations in the electric charge balance of a fiber dispersion during the course of producing a wet process type soft fiberboard (also referred to as insulation board in the form of a wet process type fiberboard having a density of less than 0.35 g/cm³) by combining the use a water-soluble polymer having a cationic group and a water-soluble polymer not having a cationic group as reinforcing agents.

The technologies described in above-mentioned patent publications have difficulty in providing an environmentally-friendly wet process type hard fiberboard, which is an object of the present invention. This is because the technologies described in the first seven patent publications do not preclude the possibility of using a conventional phenol resin, while the technology of Japanese Patent Application Laid-open No. 2001-200497 relates to the production of a wet process type soft fiberboard instead of a wet process type hard fiberboard, thereby not only preventing the ensuring of adequate water resistance required by such fiberboard, but also enhancing the possibility of the occurrence of spotting defects in terms of appearance as well.

### SUMMARY OF THE INVENTION

In consideration of the circumstances as described above, an object of the present invention is to provide an environmentally-friendly wet process type hard fiberboard by finding a reinforcing agent not having an effect on environmental contamination to take the place of phenol resin having a significant effect on environmental contamination.

In order to achieve this object, the environmentally-friendly wet process type hard fiberboard according to the present invention is comprised of an acrylic resin and an epoxy resin not containing bisphenol A as reinforcing agents.

Here, although the wet process type hard fiberboard refers to a fiberboard made primarily from wood chips by steaming and pulping the fibers followed by dispersing in a large volume of water (recent wet process type hard fiberboards use recycled water for the water in consideration of protecting the environment, and the temperature of the water is ordinarily 40 to 60°C and does not exceed 100°C) to obtain a pulp slurry, adding a reinforcing agent and water-resisting agent, dehydrating and forming to a constant thickness, and hot-pressing to a density of 0.80 g/cm³ or more, bamboo or bagasse and the like may be used for the main raw material in addition to wood chips.

Although phenol resin has conventionally been used nearly exclusively for the reinforcing agent of this fiberboard, since this resin contaminates the pulp slurry, in addition to harming the surrounding environment, there are also concerns over the resulting odor and residual phenol.

Therefore, as a result of conducting extensive research, the inventors of the present invention reached the conclusion that a combination of acrylic resin and epoxy resin not containing bisphenol A is preferable as reinforcing agents free of such concerns.

Both reinforcing agents are thermosetting resins, are virtually unreactive at temperatures of 100°C or lower, become highly reactive and undergo curing when the temperature exceeds 140°C, and in terms of environmental protection, since hardly any of the water used is discharged to the outside, these reinforcing agents are optimally suited for use in wet process type hard fiberboards in which water is used by recycling numerous times.

Namely, when phenol resin is exposed for a long period of time in pulp water at 40 to 60°C or is subjected to mechanical dehydration during hot-pressing (maximum 100°C), pre-curing (curing rate increases the higher the temperature) proceeds resulting in a state in which inherent board performance is unable to be imparted. Thus, the pre-curing product (since the yield of reinforcing agent and water-resisting agent is typically considered to be about 50% in the case of a wet process type hard fiberboard, the remaining 50% is recycled thereby eliminating any opportunity for subsequent yield) binds directly with pulp or binds directly with phenol resin thereby impairing the inherent performance of the phenol resin or having negative effects on board performance by being interposed between the pulp and fresh phenol resin. In contrast, since both of these reinforcing agents do not undergo pre-curing at such temperatures and are only cured during hot-pressing (180 to 220°C), pre-curing products do not form and there are no negative effects on board performance.

In addition, since pre-curing products of phenol resins have a blackish-purple color, have adhesiveness when containing moisture and easily peel when dry, they cause considerable contamination of the surrounding environment and surrounding equipment. In contrast, since the reinforcing agents of the present invention are transparent do not undergo pre-curing until hot-pressing, the surrounding environment and surrounding equipment are kept clean.

Moreover, although hot-pressing of a wet process type hard fiberboard is ordinarily carried out by a three-stage closing process as will be described later, a large amount of moisture is discharged from the mat (that resulting from dehydration and forming of a pulp slurry to a constant thickness with a forming machine as will be described later) during mechanical dehydration of the first stage. Although reinforcing agent and water-resisting agent are contained in this moisture, in the case the reinforcing agent is phenol resin in particular, due to the blackish-purple color of the resin and as a result of having considerable adhesiveness when in the state of containing moisture, not only does the resin considerably contaminate the surrounding environment and surrounding equipment if it becomes adhered to the equipment and environment as previously described, since it also significantly contaminates the mirrored surface plate (stainless steel plate) used to obtain a smooth surface for a wet process type hard fiberboard, it ends up shortening the replacement and cleaning cycles of the mirrored surface plate.

In contrast, since the reinforcing agents of the present invention are transparent and do not undergo pre-curing even if discharged during hot-pressing and dehydration, not only are the surrounding equipment and surrounding environment kept clean, but the replacement and cleaning cycles of the mirrored surface plate can be extended considerably.

As can be understood from the above-mentioned explanation, the use of the acrylic resin and bisphenol A-free epoxy resin of the present invention as reinforcing agents of a wet process type hard fiberboard makes it possible to obtain a wet process type hard fiberboard that is much more environmentally-friendly than the use of a conventional reinforcing agent in the form of phenol resin.

However, the acrylic resin of the present invention is preferably a polymer having a carboxylic acid to induce thermal crosslinking, examples of which include polymers having for monomers thereof acrylic acid, methacrylic acid, maleic acid, fumaric acid or itaconic acid, and salts thereof.

In addition, examples of the bisphenol A-free epoxy resin of the present invention include reaction products of bisphenol F and epichlorohydrin, reaction products of bisphenol AD and epichlorohydrin, reaction products of polyamine and epichlorohydrin, reaction products of acetic anhydride and epichlorohydrin, reaction products of phenol novolak and epichlorohydrin and reaction products of ortho-cresol and epichlorohydrin.

Incidentally, epoxy resin containing bisphenol A is a reaction product of bisphenol A and epichlorohydrin.

Furthermore, in the present invention, epoxy resin containing bisphenol A has been excluded from the scope of the present invention for the reasons indicated below.

Reason 1: Although epoxy resin containing bisphenol A is the most common type of epoxy resin, bisphenol A remaining in this epoxy resin results in the problem of having the action of an environmental hormone.

Reason 2: Epoxy resin containing bisphenol A is frequently in the form of a two-liquid type combining a primary agent and a curing agent, making it unsuitable for use as a reinforcing agent of a wet process type hard fiberboard. Namely, since mixing of a two-liquid type immediately causes curing to begin, in addition to not obtaining the necessary board performance during hot-pressing, as a result of the reaction product being suspended in the recycled white water, there is also a high likelihood of the occurrence of appearance defects in the resulting hard fiberboard in the form of spots and the like. Incidentally, the bisphenol A-free epoxy resin of the present invention is of the one-liquid type.

### BRIEF DESCRIPTION OF THE DRAWINGS

FIG. 1 shows the front side of a wet process type hard fiberboard in the examples; and
FIG. 2 shows the rear side of a wet process type hard fiberboard in the examples.

### DESCRIPTION OF THE PREFERRED EMBODIMENTS

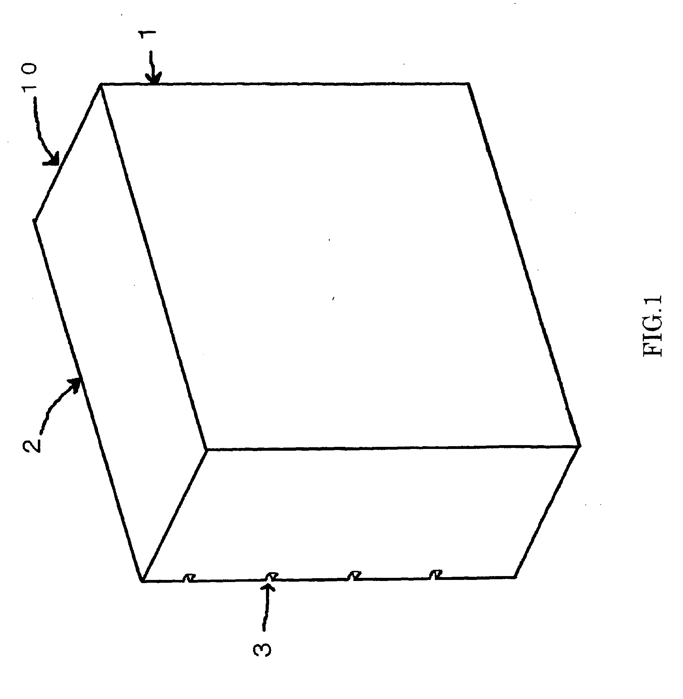

FIG. 1 shows a wet process type hard fiberboard 10.

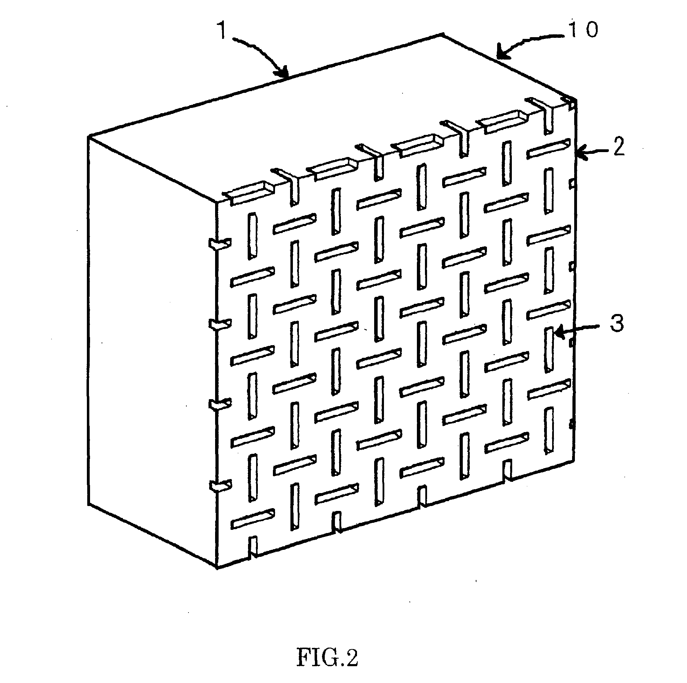

Although a front side 1 of the hard fiberboard is smooth, a rear side 2 is in the form of a mesh 3 as shown in FIG. 2 as a result of facing a wire mesh for facilitating dehydration in a hot-pressing step to be described later. The following provides a detailed description of this hard fiberboard.

### (Slurry Preparation)

Although the pulp used consists mainly of wood for the raw material, it may also be made from bamboo or bagasse.

Mechanical pulp, in which pulping is carried out by mechanical treatment, chemical pulp, in which pulping is carried out by chemical treatment, or semi-ground pulp, in which pulping is carried out by a combination of mechanical treatment and chemical treatment, can be used for the raw material. This pulp is normally in the form of a slurry by dispersing in water at a concentration of about 3% by weight.

Next, the slurry is prepared by adding the acrylic resin and bisphenol A-free epoxy resin of the present invention as reinforcing agents so that the amount of acrylic resin is about 0.05 to 2.0% by weight and the amount of the bisphenol A-free epoxy resin is about 0.1 to 2.0% by weight based on 100 parts of pulp in the slurry, adding a water-resisting agent in the form of paraffin wax at 0.1 to 1.5% by weight based on 100 parts of pulp in the slurry, and adding preservatives or aging preventives as necessary.

Although subsequently described in detail, the amount of reinforcing agent added is most preferably 0.05 to 0.25% by weight for the acrylic resin, and 0.50 to 1.00% by weight for the bisphenol A-free epoxy resin. This is because a combination of amounts added within these ranges makes it possible to obtain the most preferable board performance.

Furthermore, in addition to paraffin wax, water repellent agents such as silicon compounds or zirconium compounds can also be used for the water-resisting agent.

### (Wet Mat Preparation)

The above-mentioned slurry is ordinarily used for wet mat preparation after diluting to a pulp concentration of about 1.0 to 1.5% by weight. A known method is applied for wet mat preparation, such as a cylindrical method, Fourdrinier method or Chapman method. Regardless of the method, the slurry is run out onto a wire mesh, dehydrated from the back of the wire mesh by vacuum suction and formed into a wet mat. On the front side of this wet mat, the lengthwise direction of the pulp is oriented to be roughly in the horizontal direction, while on the rear side (metal mesh side), the lengthwise direction is oriented to as to be roughly perpendicular by vacuum suction, and pulp density is higher on the front side and comparatively low on the rear side. Moreover, the rear side has a rough surface due to printing of the wire mesh thereon. This wet mat may be dehydrated as desired to a dryness [pulp weight ÷ (pulp weight + water weight) x 100%] of about 30 to 40% by cold pressing.

### (Hot Pressing)

The above-mentioned wet mat subsequently undergoes hot pressing. Although hot pressing is ordinarily carried out at a temperature of about 180 to 220°C, in the case of producing a hard fiberboard having a thickness of 2.5 mm, for example, hot pressing is carried out with a three-stage closing process comprising 50 to 60 seconds at a pressing pressure of 40 kg/cm², 60 to 90 seconds at 8 to 10 kg/cm² and 60 to 90 seconds at 20 to 35 kg/cm². In this three-stage closing process, by facilitating the escape of water vapor contained in the wet mat by lowering the pressure in the second stage (also referred to as a degasification process), blowout of the wet mat is prevented. Furthermore, although the pressing apparatus is equipped with an upper mold and a lower mold, by providing a spacer in the form of a wire mesh or porous plate on the surface of the lower mold, water squeezed from the wet mat is discharged.

As has been described above, since the pulp is oriented roughly perpendicular to the lengthwise direction on the rear side of the wet mat, squeezing of water from the wet mat is carried out smoothly as a result of being guided between the pulp.

### (Moisture Adjustment and Curing)

Following hot pressing, the wet process type hard fiberboard is either sprayed with water or subjected to moisture adjustment treatment to adjust to a prescribed moisture content followed by curing for a fixed period of time to obtain a finished product.

### Examples

The following provides an explanation of examples of the present invention by comparing with conventional reinforcing agents in the form of phenol resins.

The test pieces for measuring board performance used for testing were cut from a wet process type hard fiberboard having a thickness of 2.5 mm and size of 30 cm on a side produced with an experimental apparatus in compliance with first ten paragraphs in the Description of the Preferred Embodiments of the present invention, and the test piece for measuring bending strength measured 3 cm x 11 cm (span: 6 cm), while the test piece for measuring water absorption measured 5 cm x 5 cm.

Since pulp is ordinarily anionically charged, in order to increase the yield of reinforcing agent and water-resisting agent in the pulp, cationic charge is preferable in consideration of favorable reactivity with the anionic pulp.

Thus, although the paraffin wax used in a wet process type hard fiberboard is ordinarily also cationically charged, since increasing the yield of paraffin wax alone in the pulp is detrimental, it is preferably only contained in combination with other reinforcing agents. One reason for this is that the viscosity of paraffin wax is lower than that of other reinforcing agents. In other words, physical bonding in the form of viscosity contributes more greatly to yield in pulp than chemical bonding in the form of anion-cation bonding.

**Table 1**

| Water-resisting Agent | Reinforcing Agent | Bending Strength (N/mm²) | Water Absorption (%) |
|---|---|---|---|
| None | None | 22 | 85 |
| Paraffin wax: | None | 20 | 88 |
| 0.4% | | | |
| Paraffin wax: | Phenol resin: | 31 | 48 |
| 0.4% | 0.5% | | |
| Paraffin wax: | Acrylic resin: | 25 | 55 |
| 0.4% | 0.5% | | |
| Paraffin wax: | Epoxy resin: 0.5% | 52 | 25 |
| 0.4% | | | |

Based on Table 1, board performance was clearly the most inferior for acrylic resin among the reinforcing agents tested. A possible reason for this is that since the acrylic resin of the present invention is anionically charged, there was naturally little reactivity with the anionically charged pulp. In this case, however, board performance was better than the addition of paraffin wax alone. This is thought to be due to the anions of the acrylic resin reacting with the cations of the paraffin wax resulting in the formation of a large block, and this physically accumulated in the pulp. The reason why the values are not that good is that, because a large block is formed, dispersion in the pulp becomes poor.

On the other hand, since the bisphenol A-free epoxy resin is cationically charged, it accumulates in the pulp due to chemical bonding with the anionically charged pulp and physical bonding in the form of the viscosity inherently possessed by epoxy resin, thereby realizing board performance superior to that of phenol resin.

Table 2 shows a comparison of board performance with respect to phenol resin and bisphenol A-free epoxy resin in the case of increasing the amount of reinforcing agent added. From this table as well, the board performance of the bisphenol A-free epoxy resin can be clearly seen to be superior to that of phenol resin.

**Table 2**

| Reinforcing Agent | Bending Strength (N/mm²) | | Water Absorption (%) | |
|---|---|---|---|---|
| Amount added (%) | Phenol | Epoxy | Phenol | Epoxy |
| 0.25 | 28 | 43 | 48 | 27 |
| 0.50 | 32 | 52 | 45 | 25 |
| 0.75 | 33 | 56 | 43 | 29 |
| 1.00 | 35 | 50 | 44 | 41 |
| 2.00 | 38 | 50 | 42 | 40 |

However, chemical bonding between bisphenol A-free epoxy resin and pulp is believed to occur by, for example, the azetidinium ring (Chemical Formula 1) of the bisphenol A-free epoxy resin reacting with the carboxyl group (Chemical Formula 2) and hydroxyl group (Chemical Formula 3) of the cellulose in the pulp in the manner indicated below. In other words, bonding between pulp fibers is believed to be strengthened by this type of reaction.

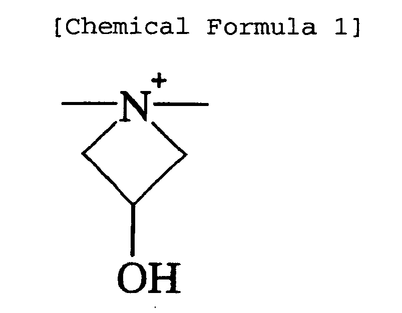

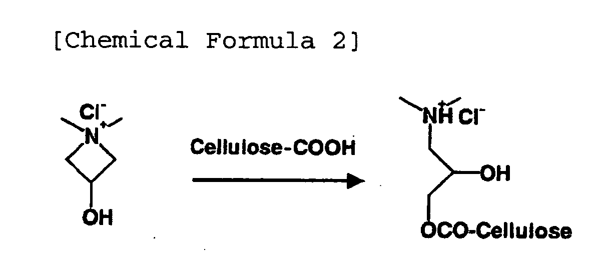

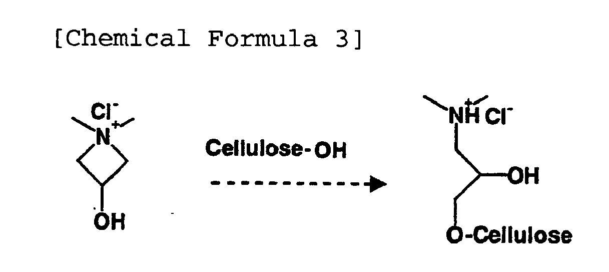

Furthermore, in Table 2, water absorption rapidly becomes poor when the added amount of bisphenol A-free epoxy resin reaches 1.00% or more. This is thought to be due to the paraffin was precipitating accompanying the increase in epoxy resin, thereby resulting in poor dispersion of the paraffin wax due to the effect thereof.

Next, Tables 3 and 4 illustrate the effect of combining the acrylic resin and bisphenol A-free epoxy resin according to the present invention.

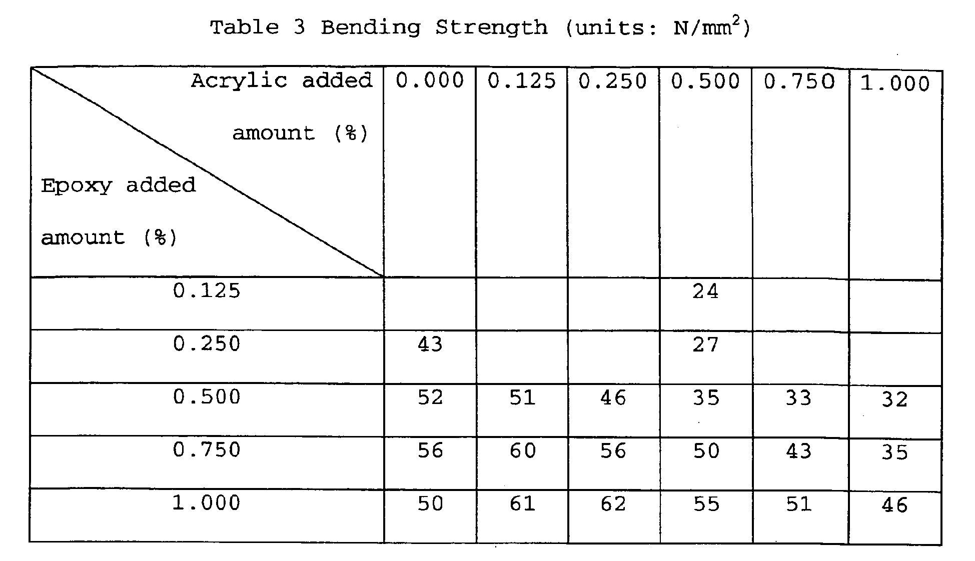

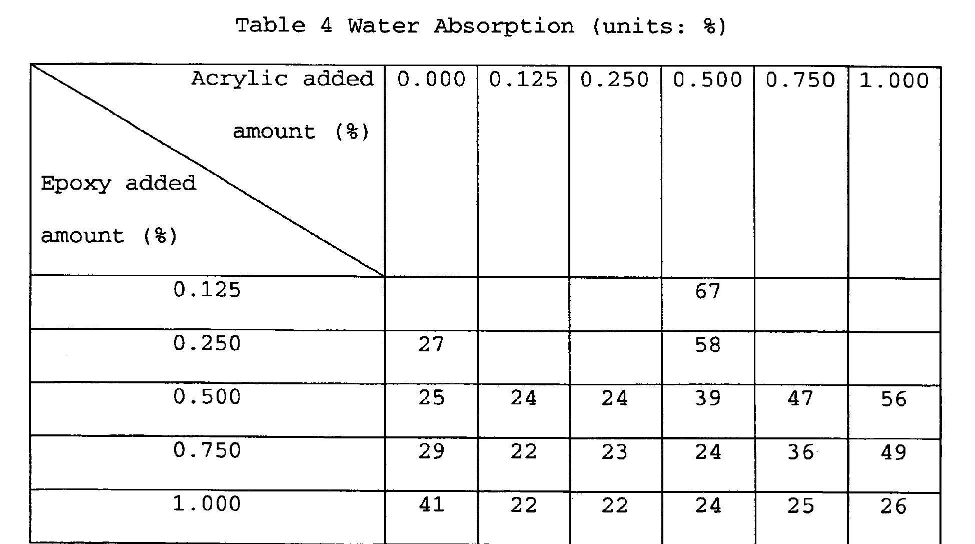

On the basis of Tables 3 and 4, the effect of combining acrylic resin and bisphenol A-free epoxy resin can be judged to be apparent at ratios of the amount of acrylic resin added to the amount of bisphenol A-free epoxy resin added of 0.125:0.75, 0.125:1.00, 0.25:0.75 and 0.25:1.00. Thus, in consideration of total cost, the effect of combining acrylic resin and bisphenol A-free epoxy resin can be judged to be optimal at a ratio of the amount of acrylic resin added to the amount of bisphenol A-free epoxy resin added of 0.125:0.75.

Although a tendency for board performance to decrease as the amount of acrylic resin increased is observed in Tables 3 and 4, this is believed to be due to the effect of the degree of cohesive strength between the acrylic resin and the bisphenol A-free epoxy resin. In other words, an aggregate of the acrylic resin and bisphenol A-free epoxy resin has a strong cohesive strength, resulting in the formation of a paste as the amount of acrylic resin increases and eventually forming a large block, thereby causing a corresponding decrease in dispersibility in the pulp. This can be judged to appear in the form of a decrease in board performance.

The reason for hardly any change in water absorption even if the amount of acrylic resin is increased in the case of an added amount of bisphenol A-free epoxy resin of 1.00% is thought to be caused by the fact that, although particles of paraffin wax precipitate when the amount of bisphenol A-free epoxy resin is increased in the paraffin wax, if the amount of acrylic resin is simultaneously increased, the growth of blocks of precipitate discontinues due to the effects of limitations on the physical bonding strength of the blocks of acrylic resin and bisphenol A-free epoxy resin, thereby not leading to a decrease in dispersibility of the paraffin wax.

Next, a comparison of board performance is shown in Table 5 between the reinforcing agents of the present invention (combination of acrylic resin and bisphenol A-free epoxy resin, to be referred to as the resins of the present invention) (*2) and a conventional reinforcing agent in the form of phenol resin (*3) in the case of recycling water (*1).
*1: In the case of using water repeatedly, since the amount of water used in the next cycle is insufficient by the amount of water contained in the mat of the previous cycle, that corresponding amount (roughly 1/12 of the total amount of water) is replenished with fresh water.
*2: Addition of 0.25% acrylic resin, 0.75% bisphenol A-free epoxy resin and 0.4% paraffin wax.
*3: Addition of 1.0% phenol resin and 0.4% paraffin wax.

**Table 5**

| Board Performance | Reinforcing Agent | No. of Cycles Water Used Repeatedly | | | | | | | | | |
|---|---|---|---|---|---|---|---|---|---|---|---|
| | | 1 | 2 | 3 | 4 | 5 | 6 | 7 | 8 | 9 | 10 |
| Bending Strength (N/mm²) | Resins of Present Invention | 50 | 48 | 49 | 49 | 53 | 50 | 54 | 49 | 52 | 52 |
| | Phenol Resin | 34 | 40 | 40 | 41 | 38 | 39 | 40 | 42 | 40 | 42 |
| Water Absorption (%) | Resins of Present Invention | 48 | 41 | 33 | 30 | 27 | 27 | 25 | 26 | 25 | 26 |
| | Phenol Resin | 43 | 33 | 35 | 32 | 32 | 29 | 30 | 33 | 27 | 27 |

As is clear from Table 5, the level of board performance can be judged to be considerably superior for the reinforcing agents of the present invention as compared with the conventional reinforcing agent in the form of phenol resin with respect to bending strength in particular.

However, in recognition of the progression of environmental measures in the form of reduced VOC levels, test pieces of a wet process type hard fiberboard having a thickness of 2.5 mm (surface area: 80 cm²) were prepared to investigate the degree to which resins of the present invention are superior to a conventional reinforcing agent in the form of phenol resin with respect to reducing levels of VOC. The test pieces were placed in a 10 liter Tedlar bag containing 4 liters of pure nitrogen gas and heated for 2 hours at 65°C followed by sampling the entire 4 liters with a DNPH cartridge and measuring the level of volatile aldehydes by high-performance liquid chromatography. The results are shown in Table 6.

**Table 6 (units: µg/test piece)**

| Reinforcing Agent | Aldehydes | |
|---|---|---|
| | Formaldehyde | Acetaldehyde |
| Resins of Present Invention | 1.7 | 2.6 |
| Phenol Resin | 3.6 | 4.4 |

On the basis of Table 6, in the case of using the resins of the present invention as reinforcing agents, it is obvious that the level of aldehydes is half the case of using a conventional phenol resin as a reinforcing agent.

In addition, the testing method indicated below was carried out with respect to odor. Namely, test pieces (4 cm x 7 cm) were placed in a steel drum having a volume of 4 liters followed by carrying out a dry test (consisting of covering the container and heating for 60 minutes at 80°C followed by cooling to room temperature and smelling the odor) and a wet test (consisting of uniformly applying distilled water onto the test pieces in an amount equal to 5% the weight of the test pieces, covering the container and allowing to stand for 60 minutes in a constant temperature/constant humidity chamber at 23 ± 2°C and 50 ± 5% RH followed by smelling the odor). Furthermore, in this odor test, a total of six samplers were used since a minimum of five samplers are required. Thus, two drums were prepared since the limit was 3 samplers/drum. The results are shown in Table 7.

**Table 7**

| Reinforcing Agent | Dry | | Wet | |
|---|---|---|---|---|
| | Intensity*1 | Unpleasantness*1 | Intensity*1 | Unpleasantness*1 |
| Resins of Present Invention | 1.5 | -0.5 | 0.8 | -0.3 |
| Phenol Resin | 2.1 | -0.8 | 1.4 | -0.6 |
| Reference Values*2 | 3 or less | -1.5 or more | 3 or less | -1.5 or more |

| | | | | |
|---|---|---|---|---|
| *1: Isovaleric acid (concentration: 10⁻⁵) was used for the reference odor, the intensity thereof was assigned a value of 3 (level at which odor can be detected easily) and a degree of unpleasantness of -2 (unpleasant). Each sampler scored the odors according to each level (intensity: 0 (odorless) to 5 (powerful odor), unpleasantness: -3 (extremely unpleasant) to 3 (extremely pleasant), and the results indicate the average scores. *2: Reference values | | | | |

On the basis of Table 7, the use of the resins of the present invention as reinforcing agents is clearly advantageous as compared with using a conventional phenol resin as a reinforcing agent with respect to odor as well.

As has been described in detail above, since a wet process type hard fiberboard using the resins of the present invention as reinforcing agents results in hardly any contamination of water used in large amounts during production (normally referred to as white water and used by recycling) in comparison with a wet process type hard fiberboard using a conventional phenol resin as a reinforcing agent, not only can production equipment and the surrounding environment be kept clean, there is also no concern over residual phenol, there is naturally no odor of phenol, and since aldehyde levels are also reduced in addition to being able to prevent problems attributable to odor in advance, this wet process type hard fiberboard is also able to contribute to reduction of VOC. Namely, a wet process type hard fiberboard using the resins of the present invention as reinforcing agents is naturally able to be much more environmentally-friendly than wet process type hard fiberboard using a conventional phenol resin as a reinforcing agent, while also enabling board performance that is superior to a wet process type hard fiberboard using conventional phenol resin as a reinforcing agent.

Embodiments of the present invention have been set forth in the above description with reference to the appended figures. However, the present invention is not limited to the above-described embodiments, and variations and modifications may be made without departing from the scope of the appended claims.

## Claims

1. A wet process type hard fiberboard, wherein reinforcing agents thereof are an acrylic resin and an epoxy resin not containing bisphenol A.

2. The wet process type hard fiberboard according to claim 1, wherein the reinforcing agents are used such that the epoxy resin not containing bisphenol A is contained in a larger amount than the acrylic resin.

3. The wet process type hard fiberboard according to claim 1, wherein the reinforcing agents are an anionic acrylic resin and a cationic epoxy resin not containing bisphenol A.

4. A wet process type hard fiberboard according to claim 1, wherein the acrylic resin and the epoxy resin not containing bisphenol A are both thermosetting resins.

5. A wet process type hard fiberboard according to claim 4, wherein the acrylic resin and the epoxy resin not containing bisphenol A are both thermosetting resins which have a curing reaction which hardly proceeds at all at a temperature of 100°C or lower.

## Patentansprüche

1. Hartes Faserbrett bzw. harte Faserplatte, hergestellt durch ein Nassverfahren, bei dem die eingesetzten Verstärkungsmittel Acrylharz und ein Epoxyharz, welches kein Bisphenol A enthält, sind.

2. Hartes Faserbrett bzw. harte Faserplatte, welches bzw. welche durch ein Nassverfahren hergestellt wurde, nach Anspruch 1, wobei die Verstärkungsmittel so eingesetzt werden, dass das kein Bisphenol A enthaltendes Epoxyharz in einer größeren Menge als das Acrylharz enthalten ist.

3. Hartes Faserbrett bzw. harte Faserplatte, welches bzw. welche durch ein Nassverfahren hergestellt wurde, nach Anspruch 1, wobei die Verstärkungsmittel ein anionisches Acrylharz und ein kein Bisphenol A enthaltendes kationisches Epoxyharz sind.

4. Hartes Faserbrett bzw. harte Faserplatte, welches bzw. welche durch ein Nassverfahren hergestellt wurde, nach Anspruch 1, wobei das Acrylharz und das kein Bisphenol A enthaltende Epoxyharz beide hitzehärtbare Harze sind.

5. Hartes Faserbrett bzw. harte Faserplatte gemäß Anspruch 4, wobei das Acrylharz und das kein Bisphenol A enthaltende Epoxyharz beides hitzehärtbare Harze sind, die eine Härtungsreaktion aufweisen, welche kaum bei einer Temperatur von fast 100°C oder darunter abläuft.

## Revendications

1. Panneau de fibres dur fabriqué par procédé humide, dans lequel des agents de renfort de celui-ci sont une résine acrylique et une résine époxy ne contenant pas de bisphénol A.

2. Panneau de fibres dur fabriqué par procédé humide selon la revendication 1, dans lequel les agents de renfort sont utilisés de sorte que la résine époxy ne contenant pas de bisphénol A est contenue en une plus grande quantité que la résine acrylique.

3. Panneau de fibres dur fabriqué par procédé humide selon la revendication 1, dans lequel les agents de renfort sont une résine acrylique anionique et une résine époxy cationique ne contenant pas de bisphénol A.

4. Panneau de fibres dur fabriqué par procédé humide selon la revendication 1, dans lequel la résine acrylique et la résine époxy ne contenant pas de bisphénol A sont toutes les deux des résines thermodurcissables.

5. Panneau de fibres dur fabriqué par procédé humide selon la revendication 4, dans lequel la résine acrylique et la résine époxy ne contenant pas de bisphénol A sont toutes les deux des résines thermodurcissables qui ont une réaction de cuisson qui n'a presque pas du tout lieu à une température de 100 °C ou moins.
